# EUROPEAN PATENT APPLICATION

(11) **EP 1 760 101 A1**
(43) Date of publication of application: **07.03.2007**
(21) Application number: 05753292.1
(22) Date of filing: 24.06.2005
(51) Int. Cl.: C08G 59/08

(54) **EPOXY RESIN, EPOXY RESIN COMPOSITION AND CURED PRODUCT THEREOF**

(30) Priority: 25.06.2004 JP 2004188841; 25.06.2004 JP 2004188844
(71) Applicant: NIPPON KAYAKU KABUSHIKI KAISHA, Tokyo 102-8172 (JP)
(72) Inventor: NAKANISHI, Masataka, Saitama, 3300835 (JP); AKATSUKA, Yasumasa NIPPON KAYAKU K.K. Asa factory, Yamaguchi, 7570002 (JP); OSHIMI, Katsuhiko, Saitama, 3380001 (JP); TANAKA, Ryutaro, Tokyo, 1150042 (JP)
(74) Representative: Gille Hrabal Struck Neidlein Prop Roos
(86) International application number: PCT/JP2005/011670
(87) International publication number: WO 2006/001395

(57) **Abstract**

The present invention relates to an epoxy resin whose cured product has a high heat resistance, and directed to provide an epoxy resin improved in adhesiveness and toughness in comparison with the conventional highly heat resistant epoxy resin. Specifically disclosed is an epoxy resin obtainable by glycidylation of a mixture of
(a) a phenol compound condensate which is a condensate of phenols and glyoxal and contains not less than 80% (area % by a gel permeation chromatography) of a compound represented by the formula (1): 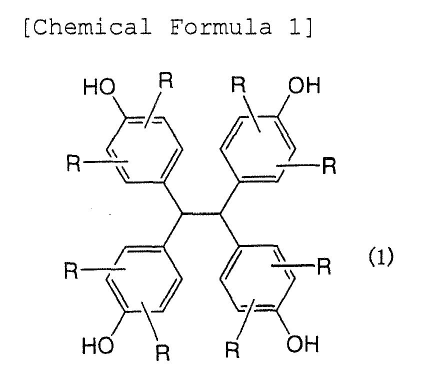 (wherein R represents each independently a hydrogen atom, (C₁-C₁₅) hydrocarbon group or trifluoromethyl group); and
(b) a phenol compound other than (a) or a phenol resin.

## Description

### Technical Field

The present invention relates to an epoxy resin which is useful for a wide range of application fields such as electric and electronic parts insulating materials represented by high reliability semiconductor sealing, various electric and electronic materials including laminated sheets (printed circuit boards) and CFRP (carbon fiber reinforced plastics), molding materials, cast molding materials, laminated materials, coating compositions, adhesives, resists and optical materials, an epoxy resin composition comprising the same and a cured product thereof.

### Background Art

Epoxy resin generally provides, by curing with various curing agents, a cured product superior in mechanical properties, water resistance, chemical resistance, heat resistance, electric properties or the like, and has been utilized in a wide range of fields such as adhesives, coating compositions, laminated sheets, molding materials and cast molding materials.
As the epoxy resin, those in a liquid form at ordinary temperature or having a softening point of around 50 to 100°C are generally used. In recent years, in the epoxy resins or cured products thereof in the above fields, further improvements in various characteristics such as high purity, heat resistance, moisture resistance, adhesiveness, low dielectric property, fast curing property, flame retardancy and high toughness have been demanded. Among them, further enhancements in heat resistance, moisture resistance and high toughness have been demanded, due to upgrading in application fields such as electric and electronic industry, automobile and space aeronautics.

Further, as a problem in using the epoxy resin, storage stability thereof is included. Namely, there are two types in use of the epoxy resin, one is two-component type in which resin and curing agent stored separately are mixed before use and the other is one-component type in which resin is stored together with curing agent, etc. from the beginning. Though one-component type is more advantageous in workability, but a problem has been pointed out that the epoxy resin gradually reacts with curing agent during storage resulting in variation of viscosity in the case of liquid composition or variation of flow property in the case of solid composition.
Also, recently photosensitive resin has been popularly used due to its simple and convenient curing conditions and workability thereof. However, since a high level of reliability required for electric and electronic materials, the reliability cannot be achieved only by simply hardening with light because of its low moisture resistance and heat resistance, in particular, photo- and thermo-curable resin has been recently attracting attention. For example, in the fields of solder resist, hole plugging ink, overcoat and various kinds of adhesives, an epoxy resin composition, characterized by being added to these resin compositions and subjected to primary curing by light then further secondary curing by heating, has been used. In these fields, storage stability of the epoxy resin until the second curing becomes important. In view of such demand also, a crystalline epoxy resin has been attracting attention.

Further, generally cured products having high heat resistance tend to have low moisture resistance in return. As an example of such epoxy resin, a crystalline tetra-functional epoxy resin, for example, an epoxy resin obtained by glycidylation of 1,1,2,2-tetrakis(4-hydroxyphenyl)ethane has been reported (Patent Literature 1) . This epoxy resin has been reported to have a melting point close to 180°C, and an epoxy resin composition containing this epoxy resin is superior in storage stability exhibiting little aging even after standing at 80°C for a long period of time, and further a cured product thereof has high heat resistance, but various physical properties thereof such as adhesiveness and toughness are not sufficient.

Patent Literature 1: JP-A-2004-43533

### Disclosure of the Invention

### Problem to be Solved by the Invention

The present invention relates to an epoxy resin having high heat resistance in a cured product thereof, and is directed to provide an epoxy resin having improved adhesiveness and toughness in comparison with conventional highly heat resistant epoxy resins.

### Means for Solving the Problem

The inventors of the present invention have intensively studied a way to develop such epoxy resin having the characteristics as described above, and accomplished the present invention.
Namely, the present invention relates to:
(1) An epoxy resin obtained by glycidylation of a mixture of:
   (a) a phenol compound condensate which is a condensate of phenols and glyoxal and contains not less than 80% (area % by gel permeation chromatography) of a compound represented by the formula (1): 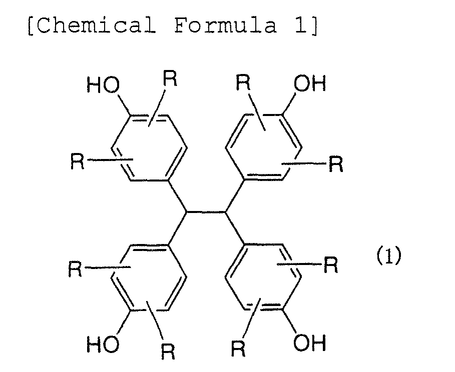 (wherein R represents each independently hydrogen atom, (C₁-C₁₅) hydrocarbon group or trifluoromethyl group); and
   (b) a phenol compound other than (a) or a phenol resin;
(2) The epoxy resin according to the above (1), wherein the component (b) is a phenol-aralkyl resin;
(3) The epoxy resin according to the above (1) or (2), characterized by that a form thereof is crystalline powder;
(4) The epoxy resin according to the above (3), wherein melting point thereof is 80 to 170°C;
(5) The epoxy resin according to any one of the above (1) to (4), wherein a ratio of the component (b) is not more than 25% by weight relative to the total amount of a mixture of the component (a) and the component (b);
(6) The epoxy resin according to any one of the above (1) to (5), wherein the component (b) is a biphenyl type phenol-aralkyl resin;
(7) A process for producing an epoxy resin, characterized by that a mixture of the component (a) and the component (b) described in the above (1) is glycidylated with an epihalohydrin;
(8) The process for producing an epoxy resin according to the above (7), characterized by that a mixture composed of 65 to 95% by weight of the component (a) and 35 to 5% by weight of the component (b) relative to the total amount of the component (a) and the component (b) is glycidylated with an epihalohydrin, then an epoxy resin crystal is separated out from the resultant reaction liquid;
(9) The process for producing an epoxy resin according to the above (8), characterized in that water is added in order to separate out an epoxy resin crystal;
(10) The process for producing an epoxy resin according to any one of the above (7) to (9), characterized by that an epoxy resin crystal is obtained by distilling off solvents contained in an epoxy resin crystal dispersion obtained by separating out an epoxy resin crystal;
(11) An epoxy resin composition characterized by comprising the epoxy resin according to any one of the above (1) to (6) and a curing agent;
(12) A cured product obtained by curing the epoxy resin composition according to the above (11);
(13) The epoxy resin composition characterized by comprising the epoxy resin according to any one of the above (1) to (6) and a compound having an ethylenically unsaturated group;
(14) The epoxy resin according to any one of the above (1) to (4), wherein a ratio of the component (b) is not more than 35% by weight relative to the total amount of a mixture of the component (a) and the component (b).

### Effect of the Invention

The epoxy resin of the present invention is an epoxy resin whose cured product exhibits superior heat resistance, and is improved in brittleness and water resistance, in comparison with the conventional highly heat resistant epoxy resin obtained by glycidylation of a phenol resin, which is a condensate of glyoxal and phenol. In addition, since the epoxy resin of the present invention has an improved glass transition point and a significantly lowered linear expansion coefficient in comparison with a usual epoxy resin, it can be said to be an epoxy resin superior in heat resistance. Further, the epoxy resin of the present invention can be converted to a crystalline state, and by dispersing the epoxy resin of the present invention in a thermosetting resin composition or a photo- and heat-curable resin composition, an epoxy resin composition superior in heat stability can be obtained. Accordingly, the epoxy resin composition of the present invention is extremely useful in a wide range of application fields such as electric and electronic materials, molding materials, casting molding materials, laminated materials, coating compositions, adhesives, resists and optical materials.

### Best Mode for Carrying Out the Invention

The crystalline epoxy resin of the present invention can be obtained by glycidylation that a mixture of
(a) a phenol compound condensate obtained by condensating glyoxal and phenols, in which content of a compound of the above formula (1) is not less than 80% (area % by gel permeation chromatography; when more accurate measurement is desired, a high performance liquid chromatography (274 nm) is preferable), preferably not less than 95%, and
(b) a phenol compound other than (a) or a phenol resin, is reacted with an epihalohydrin.
   In the present invention, mixing ratio of the component (a) and the component (b) is not particularly limited. An example of preferable embodiment includes a case when glycidylated compound of said mixture can be obtained as a crystal. In this case, content of the component (a) in the mixture of the component (a) and the component (b) (a ratio to the total amount of both components) may be possibly not less than 60% by weight, and preferably not less than 65% by weight, more preferably not less than 70% by weight, further more preferably not less than 75% by weight, and most preferably not less than 80% by weight (hereinafter, "%" means "% by weight" unless otherwise noted). Accordingly, content of the component (b) is generally not more than 35%, preferably not more than 25%, and more preferably not more than 20% to the total amount of the component (a) and the component (b).
   Upper limit of the component (a) is not particularly limited, so long as the effect of the present invention can be achieved, but it is generally not more than 98%, more preferably not more than 95%, and further more preferably not more than 92%. Lower limit of the component (b) becomes remnant of the component (a), thus, it is preferably not less than 2%, more preferably not less than 5%, and further more preferably not less than 8%.
   Further, when a glycidyl ether of said mixture is not desired to obtain as a crystal form of, the ratio of each component to the total amount of the component (a) and the component (b) can be varied more widely. For example, the component (a) may be possibly not less than 5%, preferably not less than 10%, and more preferably not less than 15%, and upper limit thereof is the same as described above. In the case of the component (b), lower limit is same as described above, but upper limit is, for example, not more than 95%, more preferably not more than 90%, and further more preferably not more than 85%.

In the general formula (1) of the component (a), R represents each independently hydrogen atom, halogen atom, (C₁-C₁₅) hydrocarbon group or trifluoromethyl group. In this connection, halogen atom includes fluorine atom, chlorine atom, bromine atom, iodine atom, and the like. Also, (C₁-C₁₅) hydrocarbon group includes chained alkyl group or cyclic alkyl group such as methyl, ethyl, n-propyl, isopropyl, cyclopropyl, n-butyl, sec-butyl, tert-butyl, isobutyl, cyclobutyl, n-pentyl, isopentyl, neopentyl, tert-pentyl, cyclopentyl, n-hexyl, isohexyl, cyclohexyl, n-heptyl, cycloheptyl, n-octyl and cyclooctyl; allyl group; and aryl group. Also, aryl group includes phenyl, naphthyl and toluyl. Among them, hydrogen atom, methyl, allyl and tert-butyl are preferable. Substitution positions of R are not particularly limited, but can be each independently either an ortho position or a meta position relative to the hydroxyl group. In the present invention, it is preferable to use 1,1,2,2-tetrakis(4-hydroxyphenyl)ethane that is a compound of the formula (1) wherein R is hydrogen atom. As a synthesis method for the component (a), the methods described in JP No. 2897850 and JP No. 3381819 can be employed.

In the present invention, (b) a phenol compound other than the component (a) or a phenol resin is not particularly limited so long as the compound or the resin has a phenolic hydroxyl group, and specifically include bisphenol compounds (bisphenol A, bisphenol F, bisphenol S, biphenol, bisphenol AD, and the like); polycondensates of phenols (phenol, alkyl group substituted phenol, aromatic group substituted phenol, naphthol, alkyl group substituted naphthol, dihydroxybenzene, alkyl group substituted dihydroxybenzene, dihydroxynaphthalene, and the like) and various aldehydes (formaldehyde, acetaldehyde, alkylaldehyde, benzaldehyde, alkyl substituted benzaldehyde, hydroxybenzaldehyde, naphthaldehyde, glutaraldehyde, phthalaldehyde, crotonaldehyde, cinnamaldehyde, and the like); polymers of phenols and various diene compounds (dicyclopentadiene, terpenes, vinylcyclohexene, norbornadiene, vinylnorbornene, tetrahydroindene, divinylbenzene, divinylbiphenyl, diisopropenylbiphenyl, butadiene, isoprene, and the like) ; polycondensates of phenols and ketones (acetone, methyl ethyl ketone, methyl isobutyl ketone, acetophenone, benzophenone, and the like); phenol-aralkyl resins; polycondensates of bisphenol compounds and various aldehydes; and the like. The component (b) includes preferably compounds having plural phenolic hydroxyl groups, and more preferably bisphenol compounds and phenol-aralkyl resins.

As the component (b), particularly preferable one is phenol-aralkyl resin. Phenol-aralkyl resin includes, for example, resins having a molecular structure in which an aromatic ring is bonded to phenols via methylene bond, isopropylidene group or ethylidene group, specifically biphenyl type phenol-aralkyl resin, phenyl type phenol-aralkyl resin, fluorenyl type phenol-aralkyl resin, naphthalene type phenol-aralkyl resin and the like, and the compound represented by the following formula (2) below is preferable.

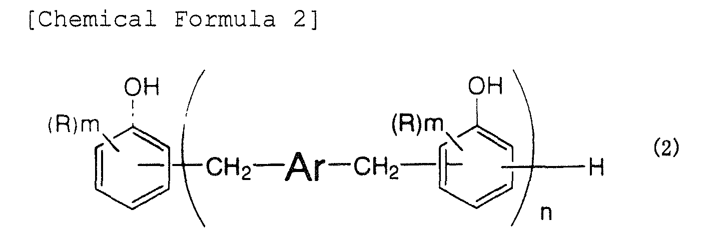

(wherein plural R groups represent each independently hydrogen atom, (C₁-C₁₅) hydrocarbon group or trifluoromethyl group; and Ar represents phenyl, biphenyl, fluorenyl or naphthyl; and m represents an integer of 1 to 4, n represents an integer of 1 to 10, and an average number of the repeating unit is generally 0.5 to 4.5, and preferably 1.0 to 3.0).
The compound of the formula (2) can be obtained by condensing phenols corresponding to the formula (2) and bis(substituted-methyl)aryl represented by the following formula:

X-CH₂-Ar-CH₂-X

(wherein X represents halogen, alkoxy or hydroxyl, and Ar represents the same group described in the above formula(2)), such as bis-halogenomethylated, bis-alkoxymethylated or bis-hydroxymethylated compound of phenyl, biphenyl, fluorenyl or naphthyl (hereinafter, simply referred to as bis-compound). Substitution positions of two substituted methyl groups on aryl group are not particularly limited, but substituted at 4,4'-positions, i.e. 4,4'-bis compound is preferable. Halogen includes fluorine, chlorine, bromine, iodine and the like. Alkoxy group is not particularly limited so long as it does not adversely influence on the above reaction, but includes generally around (C₁-C₄) alkoxy group.
In the general formula (2), R represents each independently hydrogen atom, (C₁-C₁₅) hydrocarbon group or trifluoromethyl group. The (C₁-C₁₅) hydrocarbon group includes chained or cyclic alkyl group such as methyl, ethyl, n-propyl, isopropyl, cyclopropyl, n-butyl, sec-butyl, tert-butyl, isobutyl, cyclobutyl, n-pentyl, isopentyl, neopentyl, tert-pentyl, cyclopentyl, n-hexyl, isohexyl, cyclohexyl, n-heptyl, cycloheptyl, n-octyl and cyclooctyl; allyl; or aryl. Also, aryl includes phenyl, naphthyl and toluyl. Among them, hydrogen atom, methyl, allyl and tert-butyl are preferable, and hydrogen atom is particularly preferable. Substitution positions of R are not particularly limited, but can be each independently either an ortho position or a meta position relative to the hydroxyl group. n represents 0 to 10 in an average value, and generally 0.5 to 4.5, preferably 1 to 3, and optionally 0 to 3.0.
Phenol-aralkyl resin is commercially available, and specifically includes XLC-series produced by Mitsui Chemicals, Inc., MEH-7851 produced by Meiwa Plastic Industry, Ltd., CZ-236K, CZ-256A and CZ-256C produced by Dainippon Ink and Chemicals, Inc., and the like. Also, this resin can be synthesized by a common method or a method described in JP-A-63-238129. But, it is not limited to these resins. These resins may be used alone or in combination of two or more types.

The epoxy resin of the present invention can be obtained by glycidylation of a mixture of the component (a) and the component (b) with an epihalohydrin such as epibromohydrin, epichlorohydrin and epiiodohydrin in the presence of a hydroxide of alkali metal. In the production of the epoxy resin of the present invention, a high purity phenol condensate, in which content of the compound of the above formula (1) is preferably not less than 80% (area % by a gel permeation chromatography), more preferably not less than 90%, further more preferably not less than 95%, is preferably used as a raw material. According to the knowledge of the present inventors, when the component (a) and the component (b) are each separately glycidylated, then mixed them to make an epoxy resin mixture, along with increasing content of the compound of the formula (1) in the component (a), the component (a) tends to separate out crystal easily during distilling off reaction solvent and the like after the glycidylation reaction, which is an obstacle in removal of solvent and the like from the component (a). Contrary, in the present invention, by glycidylation after mixing the component (b), solvent and the like can be removed smoothly without such phenomenon. Thus, the epoxy resin of the present invention has a great merit in the production thereof too.

In the reaction to obtain the epoxy resin of the present invention, the hydroxide of alkali metal may be used in any form of solid or aqueous solution thereof, but it is used preferably in a solid form. When an aqueous solution is used, the aqueous solution of said hydroxide of alkali metal may be continuously added into the reaction system, while water and an epihalohydrin are continuously distilled off under reduced or atmospheric pressure. The distillate is separated into two layers, then the aqueous layer is removed and the epihalohydrin layer is continuously returned to the reaction system. Amount of the hydroxide of alkali metal to be used is generally 0.5 to 2.5 moles, preferably 0. 9 to 2. 5 moles relative to 1 mole of hydroxyl group of a mixture of the component (a) and the component (b).

Further, a quaternary ammonium salt may be added as a catalyst to facilitate the reaction. Said quaternary ammonium salt includes (C₁-C₄) alkylammonium halide which may be substituted by a phenyl group such as tetramethylammonium chloride, tetramethylammonium bromide and trimethylbenzylammonium chloride, and the like. Amount of the quaternary ammonium salt to be used is generally 0.1 to 15 parts by weight, preferably 0.2 to 10 parts by weight (hereinafter, "parts" means "parts by weight" unless otherwise noted) relative to 1 equivalent of hydroxyl group of a mixture of the component (a) and the component (b).

Amount of the epihalohydrin to be used is generally 0.5 to 20 moles, preferably 0.7 to 12 moles relative to 1 mole of hydroxyl group of a mixture of the component (a) and the component (b). Optionally, the amount may be around 0.7 to 10 moles. As the epihalohydrin to be used, epichlorohydrin is easy to be industrially used.

In the reaction to obtain the epoxy resin of the present invention, the reaction may be carried out in a solvent to improve fluidity of a mixture of the component (a) and the component (b). Usable solvents include alcohols and aprotic polar solvents and the like. Alcohols include alcohols such as methanol, ethanol, iso-propanol, n-butanol and tert-butanol, preferably (C₁-C₄) alcohols, and more preferably (C₁-C₃) alcohols. In addition, aprotic polar solvents include solvents such as dimethylsulfone, dimethylsulfoxide, tetrahydrofuran and dioxine.

When alcohols are used, amount thereof to be used is generally 2 to 50% by weight, preferably 4 to 30% by weight relative to an amount of an epihalohydrin. Further, when an aprotic polar solvent is used, the amount is generally 5 to 100% by weight, preferably 10 to 80% by weight (hereinafter, "%" means "% by weight" unless otherwise noted) relative to an amount of an epihalohydrin.

Reaction temperature is generally 30 to 90°C, preferably 35 to 80°C, and may be constant or varied with time. Reaction time is generally 0.5 to 10 hours, and preferably 1 to 8 hours.
After completion of the reaction, a salt formed is preferably removed from the reaction liquid. A removal of the salt from the reaction liquid can be carried out usually by washing the reaction liquid with water. In addition, optionally the reaction liquid may be cooled down to room temperature to separate out the salt, which is then removed by filtration. In this connection, in a step of washing with water and the like, a part of the solvent used is removed. The resultant reaction liquid from which the salt has been removed is expediently referred to as reaction liquid (A).

A way to take out a reaction product from the reaction liquid (A) is not particularly limited, but preferably carried out by the methods of the following (1) and (2).
When content of the component (a) is low, for example, not more than around 75%, further not more than around 70%, or more surely not more than around 60% relative to the total amount of the component (a) and the component (b), the reaction product is taken out as a resinous form. Contrary, when content of the component (a) is high, for example, not less than 75%, or further not less than 80%, the reaction product can be taken out in a resinous form or in a form of crystal powder through crystallization process.

### Method for taking out the reaction product (taking out in a resinous form)

This is a method to take out the reaction product as a residue by distilling off directly epihalohydrin, solvent and the like from the above reaction liquid (A), and this method can be used when crystallization of the reaction product is difficult due to a low content of the component (a), or when the reaction product is not required to be taken out in a crystal form even though crystallization of the reaction product is possible.
The above reaction liquid (A) is, after washing with water or without washing with water, subjected to removals of epihalohydrin, solvent and the like under the conditions of heating and reduced pressure. Further, to obtain an epoxy resin containing less hydrolysable halogen, the recovered epoxy resin can be dissolved in a solvent such as toluene and methyl isobutyl ketone, and reacted by adding an aqueous solution of alkali metal hydroxide such as sodium hydroxide and potassium hydroxide, to ensure the ring closure. In this case, amount of the alkali metal hydroxide to be used is generally 0.01 to 0.3 moles, preferably 0.05 to 0.2 moles relative to 1 mole of the hydroxyl group of the phenol resin used for epoxidation. Reaction temperature is generally 50 to 120°C, and reaction time is generally 0.5 to 2 hours.

After completion of the reaction, the resultant salt is removed by filtering and washing with water, then the solvent is distilled off from the oil layer, to obtain the resinous epoxy resin of the present invention. Distilling off of the solvent is preferably carried out under conditions of heating and reduced pressure, and can be carried out similar to the method for distilling off the above-described unreacted epihalohydrin, solvent and the like.

### Method for taking out the reaction product (taking out in a crystalline form)

This is a method for crystallizing the desired epoxy resin from the above reaction liquid (A), and the reaction product can be taken out in a crystal form when content of the component (a) is high, for example, the component (a) is used in not less than 70%, further not less than 75%, and more surely not less than 80%, relative to the total amount of the component (a) and the component (b).
Crystallization method is not particularly limited, and various known techniques, for example, once concentrating the reaction mixture, then subjecting to recrystallization using a solvent, or reprecipitation by adding a poor solvent, can be employed, but preferably the following method is employed.

Preferable method for crystallizing the crystalline epoxy resin of the present invention from the reaction mixture after completing the glycidylation reaction can be divided roughly into two methods, one is a method (2-1) by adding a water-soluble polar solvent in advance, then crystallization with a poor solvent which hardly dissolves said epoxy resin, preferably water, and filtering to obtain the crystal, and the other is a method (2-2) by crystallization with a poor solvent, then distilling off the solvent to obtain the crystal. Since the method of 2-1 of the former is preferable to obtain the crystal having a size suitable for filtering, but the method of 2-2 may be preferable in some instances, it is preferable to select circumstantially as appropriate.
Melting point of the crystalline epoxy resin to be obtained in the present invention varies depending on kind or mixing amount of the component (b) and it cannot be categorically described, but generally 80 to 170°C, preferably 110 to 170°C, further preferably 120 to 165°C. When a crystal having high melting point is required, a crystal having a melting point of 140 to 170°C is preferable.
In this connection, "poor solvent" as used herein means a solvent to which the epoxy resin of the present invention has a solubility of not more than 5%, preferably not more than 1% at 25°C.

### Method 2-1 for taking out in a crystal

### (Method by crystallization with a water-soluble polar solvent and water then filtering and separating)

In this method, after distilling off excess epihalohydrin and the like from said reaction liquid (A) if necessary, or without distilling off, a water-soluble polar solvent is added to the reaction liquid (A), and removal of excess epihalohydrin and the like, concentration and cooling are carried out, if necessary, and then water is added thereto to separate out the epoxy resin crystal.
Step 1: Addition of a water-soluble polar solvent and removal of excess epihalohydrin
Firstly, after distilling off a part of excess epihalohydrin and the like from the reaction liquid (A) if necessary, or without distilling off, a water-soluble polar solvent is added to the reaction liquid (A) to prepare a solution or a suspension. Before or after the addition of said solvent if necessary, preferably under conditions of heating and reduced pressure, distilling off excess epihalohydrin and the like is carried out and the solution or the suspension is concentrated to a concentration at which crystal easily separates out.
In this connection, when a part of excess epihalohydrin and the like is distilled off in advance before addition of the water-soluble polar solvent, preferably the distilling off is carried out preferably under reduced pressure, at 40 to 140°C, preferably at 50 to 110°C, so that resin concentration in the reaction liquid become to 40 to 90% by weight, more preferably 50 to 80% by weight.
The water-soluble polar solvent to be used as described above includes aprotic polar solvents such as dimethylsulfoxide, N,N'-dimethylformamide, N-methylpyrrolidone, acetone, diglyme and triglyme; alcohols such as methanol, ethanol, isopropanol, n-butanol, t-butanol, ethylene glycol, propylene glycol and propylene glycol monomethyl ether; and the like. In this step, together with the water-soluble polar solvent described above, other solvent may be used in combination, if necessary. Solvent which can be used in combination includes ester type organic solvents such as ethyl acetate, butyl acetate and butyl lactate, preferably (C₁-C₄) alcohol esters of (C₁-C₄) organic acid, more preferably (C₂-C₃) organic acid; ketone type organic solvents such as methyl isobutyl ketone, methyl ethyl ketone and cyclohexanone; and aromatic type organic solvents such as toluene and xylene. Generally, when the combined use is not required, these solvents are preferably used alone.

Amount of the water-soluble polar solvent to be used is 20 to 500% by weight, preferably 50 to 300% by weight relative to the theoretical yield. When other solvents are used in combination, the solvents may be used in necessary amount as appropriate in combination.
As the water-soluble polar solvent, a high boiling point solvent (HBS) is preferable. In the present invention, high boiling point solvent means a solvent having a boiling point higher than that of epihalohydrin excessively used as a raw material, and a boiling point of the solvent is preferably 30 °C or more higher than that of epihalohydrin to be used as a raw material. As a specific example, when epichlorohydrin (boiling point: 116°C) is used as the epihalohydrin, a solvent having a boiling point higher than this by not less than 30°C is preferably used. These solvents include amide compounds such as N-methylpyrrolidone (boiling point: 202.5°C), dimethylformamide (boiling point: 153°C) and dimethylacetoamide (boiling point: 165.5°C); ethers such as diglyme (boiling point: 162°C), triglyme (boiling point: 216°C) and tetraglyme (boiling point: 275°C); ketones such as anone; dimethylsulfoxide (boiling point: 189°C) and the like. When HBS is used, an amount of epichlorohydrin contained in the crystal as a product can be surely reduced by distilling off excessively present or remaining epichlorohydrin under conditions of heating and reduced pressure after addition of HBS. Specific conditions of heating and reduced pressure varies depending on a solvent to be used and ranges thereof can not be specified categorically, but preferably epihalohydrin is distilled off usually under reduced pressure of around -0.01 to -0.1 MPa, and at around 50 to 140°C, preferably at around 50 to 110°C in temperature. More specifically, for example, when epichlorohydrin for epihalohydrin and dimethylsulfoxide for HBS are used, heating may be at a temperature of 50 to 100°C, and reduced pressure may be around -0.01 to -0.1 MPa. In particular, since residual epihalohydrin in a product is not preferable in view of influence on the environment, it is preferable to remove epihalohydrin as much as possible at this stage.

### Step 2: Crystallization

Crystallization of the reaction product from the solution obtained in the above step can be carried out by adding water to the solution obtained in the above step.
As for timing of the addition of water, water is preferably added while cooling or after cooling the solution obtained in the above step as appropriate by standing to cool, etc.
Further, amount of water to be added is, though excessive use does not cause any problem, but preferably around 50 to 150% relative to an amount of the water-soluble polar solvent to be used from the viewpoint of waste water treatment and the like.
Also, temperature of water to be used is 0 to 70°C, preferably 15 to 50°C. Attention needs to be paid to that too high temperature of water tends to cause fusion of dispersed crystals. Further, particle size can be adjusted by the temperature of water and the like. Average particle size is usually around 5 to 300 microns, but can be adjusted to a particle size of not less than 500 microns by changing a combination of temperature of water and water-soluble polar solvent to be used, or the like. Particle size is preferably adjusted to around 20 to 250 microns in view of filtering property and drying property.

### Step 3: Separation of crystal

Crystal of the desired epoxy resin can be taken out by filtering from the crystal dispersing aqueous solution obtained in the above step 2. In this step, washing with an organic solvent such as methanol and ethanol and further with water is preferable to improve purity. By drying the resultant crystal, the desired epoxy resin crystalline powder can be obtained.

### Method 2-2 for taking out in a crystal

### (Method by crystallization with a poor solvent then separating by distilling off of solvent and drying)

This is a method in which crystallization is carried out from the reaction liquid (A) with a poor solvent to obtain a crystal dispersing solution, from which all of solvent and the like are distilled off and dried, to obtain the crystal of epoxy resin.

### Step 1: Crystallization with a poor solvent

Crystallization may be carried out by adding a poor solvent, preferably an azeotropic solvent with epihalohydrin to be used (hereinafter, simply referred to as an azeotropic solvent) to the above reaction liquid (A). Before adding a poor solvent, a part of excess epihalohydrin may be distilled off from the reaction liquid to heighten an epoxy resin concentration to make crystallization easy. In this case, a part of the epoxy resin may crystalize in the reaction liquid. Distilling off of excess epihalohydrin and the like is preferably carried out under conditions of reduced pressure and heating, if necessary. In this step, specific conditions are not particularly limited, but reduced pressure is preferably -0.01 to -0.1 MPa, and temperature is preferably not lower than 40°C and not higher than 140°C, in particular, not higher than 100°C. Concentration of the epoxy resin after said distillation is preferably 40 to 90%, further preferably 50 to 80%.

The term "poor solvent" as used herein means a solvent to which the crystalline epoxy resin of the present invention hardly dissolves, and is not particularly limited, but includes, for example, alcohols such as methanol, ethanol, isopropanol, n-butanol, t-butanol, ethylene glycol, propylene glycol and propylene glycol mono-methyl ether; water; ester type organic solvents such as ethyl acetate, butyl acetate and butyl lactate; ketone type organic solvents such as acetone, methyl ethyl ketone and metyl isobutyl ketone. These solvents may be used alone or in combination of 2 or more types.

Further, in the crystallization in step 1, a solvent other than the above solvents may be used in combination. Solvents usable in combination are shown below, but partly the same solvents to the above poor solvents will be included because solubility of the epoxy resin to a solvent varies depending on skeletal structure of the epoxy resin. The solvents include aprotic polar solvents such as dimethylsulfoxide, N,N'-dimethylformamide, tetrahydrofuran, N-methylpyrrolidone, diglyme and triglyme; ester type organic solvents such as ethyl acetate, butyl acetate and butyl lactate; ketone type organic solvents such as methyl ethyl ketone, methyl isobutyl ketone and cyclohexanone; aromatic type organic solvents such as toluene and xylene.
Amount of the poor solvent to be added is 20 to 500% by weight, preferably 50 to 300% by weight relative to the theoretical yield.
When a solvent other than the poor solvent is used, amount of the solvent to be used is preferably in a range not to give an adverse effect on the yield of crystallization with the poor solvent or the like.

Further, among the poor solvents and the solvents usable in combination described above, a suitable one is an azeotropic solvent with epihalohydrin, that is, water, alcohols and aromatic type solvents. These azeotropic solvents can be known by reference to, for example, Pocket Book, edited by The Society of Synthetic Organic Chemistry, Japan, Ohmsha Ltd. , p. 346-347, or the like. As such solvent, in particular, use of water is preferable.

### Step 2: Distilling off of solvents

This is a step in which solvents are distilled off from the crystal dispersing solution obtained in the step 1.
Distillation of solvents is preferably carried out under conditions of heating and reduced pressure, and the temperature is not particularly limited so long as the crystal of epoxy resin deposited does not melt. For example, the temperature is preferably 10°C or more lower than the melting point of said epoxy resin. Further, reduced pressure is preferably -0.01 to -0.1 MPa.

When distillation of 90 to 99. 99% by weight of the solvents relative to the total amount of the solvents is completed, drying starts. Drying temperature is not particularly limited so long as the crystal does not melt and drying is possible, but preferably in a range from a temperature that 100 degrees Celcius are deducted from melting point of the crystal epoxy resin to be obtained, to a temperature that 10 degrees Celcius are deducted from melting point of said crystal epoxy resin. Drying time is preferably 1 to 36 hours, and more preferably 2 to 24 hours.

The resinous or crystalline epoxy resin obtained as described above can be used for an epoxy resin composition containing a curing agent, together with other epoxy resin if necessary. From said epoxy resin composition, a cured product superior in heat resistance can be obtained, and is used for various applications mentioned hereinafter. Further, the epoxy resin of the present invention, preferably crystalline epoxy resin can be used together with a photo-polymerization initiator and a compound having an ethylenically unsaturated group to provide a photosensitive resin composition.
Hereinafter, the epoxy resin composition of the present invention will be explained.
In the epoxy resin composition of the present invention, the epoxy resin of the present invention can be used alone or in combination with another epoxy resin. When used in combination, blend ratio of each epoxy resin can be optionally varied. For example, relative to 100 parts of the epoxy resin of the present invention, another epoxy resin can be varied in a range of around 0 to 500 parts, generally around 0 to 300 parts. As an example of the combination use, relative to 100 parts of the epoxy resin of the present invention, another epoxy resin can be used in a range of around 10 to 200 parts, preferably around 20 to 150 parts, and more preferably around 30 to 120 parts.
Ratio of the epoxy resin of the present invention in the epoxy resin composition of the present invention can be widely selected, for example, it can be varied in a range of 1 to 98%, preferably around 3 to 95%, more preferably around 5 to 90%, and the remnant is a curing agent and other additives to be added if necessary, for example, another epoxy resin, solvents and other additives, and the like.

Specific example of other epoxy resin which can be used in combination with the epoxy resin of the present invention includes, but are not limited to so long as the epoxy resin is commonly used, bisphenol compounds (bisphenol A, bisphenol F, bisphenol S, biphenol, bisphenol AD and the like); polycondensates of phenols (phenol, alkyl substituted phenol, aromatic substituted phenol, naphthol, alkyl substituted naphthol, dihydroxybenzene, alkyl substituted dihydroxybenzene, dihydroxynaphthalene and the like) and various aldehydes (formaldehyde, acetaldehyde, alkylaldehyde, benzaldehyde, alkyl substituted benzaldehyde, hydroxybenzaldehyde, naphthaldehyde, glutaraldehyde, phthalaldehyde, crotonaldehyde, cinnamaldehyde and the like); polymers of phenols and various diene compounds (dicyclopentadiene, terpenes, vinylcyclohexene, norbornadiene, vinylnorbornene, tetrahydroindene, divinylbenzene, divinylbiphenyl, diisopropenylbiphenyl, butadiene, isoprene and the like); polycondensates of phenols and ketones (acetone, methyl ethyl ketone, methyl isobutyl ketone, acetophenone, benzophenone and the like); polycondensates of phenols and aromatic dimethanols (benzene dimethanol, α,α,α',α'-benzene dimethanol, biphenyl dimethanol, α,α,α',α'-biphenyl dimethanol and the like); polycondensates of phenols and aromatic dichloromethyl compounds (α,α'-dichloroxylene, bis(chloromethyl)biphenyl and the like); polycondensates of bisphenol compounds and various aldehydes; glycidyl ether type epoxy resin obtained by glycidylation of alcohols; alicyclic epoxy resin; glycidylamine type epoxy resin; glycidylester type epoxy resin; and the like. These compounds may be used alone or in combination of 2 or more kinds.
In particular, when these epoxy resins are used in combination with the crystalline epoxy resin of the present invention, the epoxy resin to be used in combination is preferably a crystalline epoxy resin having softening point or melting point not lower than 90°C, and two or more kinds epoxy resins may be used in combination. Specific example includes, but is not limited to, bixylenol type or biphenol type crystalline epoxy resin or a mixture thereof such as YX-4000 (trade name) produced by Japan Epoxy Resins Co., Ltd., CER-3000(trade name) produced by Nippon Kayaku Co., Ltd.; bisphenol S type crystalline epoxy resin; bisphenol-fluorene type crystalline epoxy resin; hydroquinone type epoxy resin; heterocyclic type crystalline epoxy resin such as TEPIC(trade name) produced by Nissan Chemical Industries, Ltd. These epoxy resins may be used alone or in combination of 2 or more kinds.

The epoxy resin composition of the present invention contains a curing agent. Curing agent is classified to amine type compounds, acid anhydride type compounds, amide type compounds, phenol type compounds and the like, each of which includes, for example, the following curing agents listed in (a) to (e):
(a) amine type compounds, for example, diaminodiphenylmethane, diethylenetriamine, triethylenetetramine, diaminodiphenylsulfone isophorone diamine and the like;
(b) acid anhydride type compounds, for example, phthalic anhydride, trimellitic anhydride, pyromellitic anhydride, maleic anhydride, tetrahydrophthalic anhydride, methyltetrahydrophthalic anhydride, methylnadic anhydride, hexahydrophthalic anhydride methylhexahydrophthalic anhydride and the like;
(c) amide type compounds, for example, dicyandiamide, polyamide resin synthesized from dimer of linoleic acid and ethylenediamine and the like;
(d) phenol type compounds, for example,
   (i) polyhydric phenols (bisphenol A, bisphenol F, bisphenol S, fluorene-bisphenol, terpene-diphenol, 4,4'-dihydroxybiphenyl, 2,2'-dihydroxybiphenyl, 3,3',5,5'-tetramethyl-(1,1'-biphenyl)-4,4'-diol, hydroquinone, resorcin, naphthalenediol, tris-(4-hydroxyphenyl)methane, 1,1,2,2-tetrakis(4-hydroxyphenyl)ethane, and the like);
   (ii)phenol resins obtained by polycondensation between phenols (for example, phenol, alkyl substituted phenol, naphthol, alkyl substituted naphthol, dihydroxybenzene, dihydroxy naphthalene and the like) and aldehydes (formaldehyde, acetaldehyde, benzaldehyde, p-hydroxybenzaldehyde, o-hydroxybenzaldehyde, furfural, and the like), ketones (p-hydroxyacetophenone, o-hydroxyacetophenone, and the like), or dienes such as dicyclopentadiene and tricyclopentadiene;
   (iii) phenol resins obtained by polycondensation between the above phenols and substituted biphenyls (4,4'-bis(chloromethyl)-1,1'-biphenyl, 4,4'-bis(methoxymethyl)-1,1'-biphenyl and the like), or substituted phenyls {1,4-bis(chloromethyl)benzene, 1,4-bis(methoxymethyl)benzene, 1,4-bis(hydroxymethyl)benzene, and the like}
   (iv) modified compounds of the above phenols and/or modified resins of the above phenol resins;
   (v) halogenated phenols such as tetrabromobisphenol A and brominated phenol resins;
   (e) other compounds such as imidazoles, BF₃-amine complex and guanidine derivatives. These curing agent may be used alone or in combination of 2 or more kinds.

Amount of the curing agent to be used in the epoxy resin composition of the present invention is preferably 0.5 to 2.0 equivalents, and particularly preferably 0.6 to 1. 5 equivalents to one equivalent of epoxy group in the epoxy resin.

Also, the epoxy resin composition of the present invention may contain a curing accelerator. Usable curing accelerators include, for example, imidazoles such as 2-methylimidazole, 2-ethylimidazole, 2-phenylimidazole and 2-ethyl-4-methylimidazole; tertiary amines such as 2-(dimethylaminomethyl)phenol, triethylenediamine, triethanolamine and 1,8-diazabicyclo[5.4.0]undecene-7; organic phosphines such as triphenylphosphine, diphenylphosphine and tributylphosphine; metallic compounds such as tin octanoate; tetra-substituted phosphonium tetra-substituted borate such as tetraphenylphosphonium tetraphenylborate and tetraphenylphosphonium ethyltriphenylborate; tetraphenylboron salt such as 2-ethyl-4-methylimidazole tetraphenylborate and N-methylmorpholine tetraphenylborate. When curing accelerator is used if necessary, amount of the curing accelerator is 0.01 to 15 parts by weight relative to 100 parts by weight of the epoxy resin.

Further, the epoxy resin composition of the present invention may be added with inorganic filler; various compounding agents such as silane coupling agent, mold lubricant and pigment; and various thermosetting resins, if necessary. Inorganic filler includes, but is not limited to, powder or spherical beads of crystalline silica, fused silica, alumina, zircon, calcium silicate, calcium carbonate, silicon carbide, silicon nitride, boron nitride, zirconia, forsterite, steatite, spinel, titania, talc and the like. These fillers may be used alone or in combination of 2 or more kinds.

These inorganic fillers are, in particular, when an epoxy resin composition for semiconductor sealant is obtained, preferably used in a ratio of 80 to 93% in the epoxy resin composition, in view of heat resistance, moisture resistance, mechanical properties, and the like of a cured product. In this case, the remnant is the epoxy resin of the present invention, curing agent, and other additives to be added if necessary, and the additives include another epoxy resin, curing accelerator, and the like. The epoxy resin of the present invention is 1 to 19%, preferably around 2 to 18%, more preferably around 3 to 18%. The remnant of 1 to 9%, preferably 2 to 7% is curing agent and other additives to be added if necessary.

The epoxy resin composition of the present invention can be obtained by uniformly mixing the above components, and preferable use thereof is for semiconductor sealant. The epoxy resin composition of the present invention can be easily converted to a cured product thereof by a similar method to the conventionally known method. For example, the epoxy resin of the present invention and curing agent, together with curing accelerator, inorganic filler, compounding agent and various types of thermosetting resins if necessary, are sufficiently mixed to become uniform by using extruder, kneader, roll, or the like, if necessary, to obtain the epoxy resin composition of the present invention, which is molded by melt casting method, transfer molding method, injection molding method, compression molding method, or the like, and further heated at a temperature not lower than the melting point thereof for 2 to 10 hours, to obtain the cured product of the present invention.

Further, the epoxy resin composition of the present invention can be used as a varnish containing a solvent. The varnish of the present invention can be obtained by dissolving or dispersing uniformly the composition containing the epoxy resin of the present invention, a curing agent and other additives to be added if necessary in an organic solvent such as toluene, xylene, acetone, methyl ethyl ketone and methyl isobutyl ketone. Amount of the solvent to be used is generally 10 to 70%, preferably 15 to 65% to the whole varnish. The epoxy resin of the present invention accounts 10 to 70%, preferably around 20 to 50% to the whole varnish, and the remnant is a curing agent and other additives to be added if necessary. The varnish of the present invention may be used as a varnish containing an inorganic filler by further adding an inorganic filler to a solution containing the epoxy resin of the present invention, a curing agent, other additives to be added if necessary, and the solvent. The varnish of the present invention obtained as described above may be impregnated to a substrate such as glass fiber, carbon fiber, polyester fiber, polyamide fiber, alumina fiber and paper and then heated and dried to provide a prepreg. Said prepreg may be press-molded with heating to provide a cured product thereof.

As a preferable application of the epoxy resin composition of the present invention, sealant materials for semiconductor devices are included. Semiconductor devices include, for example, DIP (dual inline package), QFP (quad flat package), BGA (ball grid array), CSP (chip size package), SOP (small outline package), TSOP (thin small outline package) and TQFP (thin quad flat package). Moreover, the epoxy resin of the present invention can be utilized for sealed optical semiconductor device, due to less coloring and superior optical transparency thereof. In the optical semiconductor field, the epoxy resin composition of the present invention can be suitably used, in particular, for sealing optical semiconductor elements (semiconductor chips) such as light-emitting diode (LED), photo-transistor, CCD (charge-coupled device) and EPROM such as UV-EPROM.

Next, the photo-curable resin composition (photosensitive resin composition), preferably photo- / heat-curable resin composition comprising the epoxy resin of the present invention will be explained.
The epoxy resin of the present invention can be used as a curing agent for improving reliability in the photosensitive resin composition, preferably the photo- / heat-curable resin composition. In this case, the epoxy resin of the present invention is preferably a crystalline epoxy resin.

Said photosensitive resin composition of the present invention comprises at least the epoxy resin of the present invention and a compound having an ethylenically unsaturated group, and is useful as a sealant for high performance semiconductors and the like due to less thermal deterioration or the like. Preferable said photosensitive resin composition is a photosensitive resin composition comprising the epoxy resin of the present invention, a photo-polymerization initiator and a compound having an ethylenically unsaturated group, more preferably comprising the epoxy resin of the present invention, a resin soluble to an alkaline aqueous solution (A), a cross-linking agent (B) and a photo-polymerization initiator (C). Said photosensitive resin composition can be obtained by uniformly mixing the above resin soluble to alkaline aqueous solution (A), a cross-linking agent (B), a photo-polymerization initiator (C) and the epoxy resin of the present invention by a common method. Said photosensitive resin composition may contain the above-described inorganic filler or the like, if necessary. Further, in a preferable embodiment, the composition may contain a heat curing catalyst.
Preferable said photosensitive resin composition comprises the epoxy resin of the present invention, a photo-polymerization initiator and a compound having an ethylenically unsaturated group. In this case, content of each component is 20 to 80% of the epoxy resin of the present invention, 10 to 70% of a photo-polymerization initiator, and 10 to 70% of a compound having an ethylenically unsaturated group relative to the total amount of said three components.
More preferable said photosensitive resin composition is a photosensitive resin composition comprising the epoxy resin of the present invention, a resin soluble to an alkaline aqueous solution (A), a cross-linking agent (B) and a photo-polymerization initiator (C). In this case, each content of these four components is within a range of 5 to 60%, preferably 5 to 40%, and more preferably 10 to 30% of the epoxy resin of the present invention, 35 to 80%, preferably 40 to 75% of a resin soluble to an alkaline aqueous solution (A), 3 to 30%, preferably 5 to 20% of a cross-linking agent (B), and 2 to 30%, preferably 4 to 15% of a photo-polymerization initiator, relative to the total amount of the four components, provided that sum of each content of the four components becomes 100%. Said composition may further contain inorganic filler, solvent, or the like.
Further more preferable photosensitive resin composition comprises a heat curing catalyst in addition to the above 4 components. In this case, content of the heat curing catalyst is 0.3 to 5%, preferably 0.5 to 3% relative to the total amount of the above four components excluding the heat curing catalyst.
In the epoxy resin composition of the present invention, content of the epoxy resin of the present invention is generally 1 to 50% by weight, preferably 2 to 30% by weight relative to the total mass of the composition.

Hereinafter, the photosensitive resin composition of the present invention will be explained.
The epoxy resin of the present invention to be used in said photosensitive resin composition is preferably crystalline one as described above, in particular, those having a melting point of 140 to 170°C.
The photo-polymerization initiator will be explained in the paragraph of photo-polymerization initiator (C) described later.
The compound having an ethylenically unsaturated group is not particularly limited, but preferably a compound having a (meth)acryl group (means an acryl group or a methacryl group). These compounds are those disclosed in JP-A-2004-155916, etc. as a resin soluble to an alkaline aqueous solution or a cross-linking agent and well known. In this connection, the term used herein "(meth)acryl" means acryl or methacryl.
Hereinafter, each of the above components (A) to (C) to be contained in a preferable embodiment of the photosensitive resin composition will be specifically explained.

### Resin soluble to an alkaline aqueous solution (A);

A resin, which can be dissolved and removed with an alkaline aqueous solution, can be used without particular limitation, and any conventionally known resin, which is soluble to an alkaline aqueous solution, can be used. The resin includes, for example, a reaction product (a resin soluble to an alkaline aqueous solution having a carboxyl group) obtained by reacting an epoxy compound having two or more epoxy groups in a molecule (a) and a mono-carboxylic acid compound having an ethylenically unsaturated group in a molecule (b) to obtain an epoxycarboxylate compound, which is then reacted with polybasic acid anhydride (c), or the like, and described, for example, in JP-A-2003-21898, etc. in detail. Specifically, the resin includes KAYARAD CCR-1159H, KAYARAD PCR-1169H, KAYARAD TCR-1310H, KAYARAD ZFR-1401H, and KAYARAD ZAR-1395H (all of them produced by Nippon Kayaku Co., Ltd.), and the like.

### Cross-linking agent (B)

Any conventionally known cross-linking agent can be used. A multi-functional compound having an ethylenically unsaturated group is ordinary preferbable, and a (meth)acrylate having the (meth) acrylate group described above and other functional group is preferable. Specifically, the cross-linking agent includes KAYARAD HX-220, KAYARAD HX-620, KAYARAD DPHA, and KAYARAD DPCA-60 (all of them produced by Nippon Kayaku Co. , Ltd.), and the like.

### Photo-polymerization initiator (C);

Any conventionally known photo-polymerization initiator can be used. The initiator includes benzoin and derivatives thereof, acetophenone and derivatives thereof, anthraquinone and derivatives thereof, thioxanthone and derivatives thereof, ketals, benzophenone and derivatives thereof, phosphinoxide and derivatives thereof, and the like. Specifically, the initiator includes KAYACURE DETX-S (produced by Nippon Kayaku Co., Ltd.), Irgacure 907 (produced by Ciba Specialty Chemicals) and the like.

Furthermore, various kinds of additives, for example, fillers such as talc, barium sulfate, aluminium hydroxide, aluminium oxide, silica and clay, preferably inorganic fillers; agents giving thixotropic property such as aerosil; colorants such as phthalocyanine blue, phthalocyanine green and titanium oxide; leveling agents and antifoaming agents such as silicone and fluorinated compound; polymerization inhibitors such as hydroquinone, hydroquinone mono-methyl ether, or the like may be added for the purpose of improving various performances of the composition if necessary.
In the more preferable photosensitive resin composition comprising the above four components (the epoxy resin of the present invention, a resin soluble to an alkaline aqueous solution (A), a cross-linking agent (B) and a photo-polymerization initiator (C)), amount of the filler is 0 to 100%, preferably around 0 to 60% relative to the total amount of these four components.

The photosensitive resin composition of the present invention may contain a solvent, if necessary. Usable solvent includes, for example, ketones such as acetone, ethyl methyl ketone and cyclohexanone; aromatic hydrocarbons such as benzene, toluene, xylene and tetramethylbenzene; glycol ethers such as ethylene glycol dimethylether, ethylene glycol diethylether, dipropylene glycol dimethylether, dipropylene glycol diethylether, triethylene glycol dimethylether and triethylene glycol diethylether; esters such as ethyl acetate, butyl acetate, methylcellosolve acetate, ethylcellosolve acetate, butyl cellosolve accetate, carbitol acetate, propylene glycol monomethylether acetate, dialkyl glutarate, dialkyl succinate and dialkyl adipate; cyclic esters such as γ-butyrolactone ; and petroleum solvents such as petroleum ether, petroleum naphtha, hydrogenated petroleum naphtha and solvent naphtha. These solvents may be used alone or in combination of 2 or more kinds. In the more preferable photosensitive resin composition containing the above described four components (the epoxy resin of the present invention, a resin soluble to an alkaline aqueous solution (A), a cross-linking agent (B) and a photo-polymerization initiator (C)), amount of the solvent to be used is 0 to 50%, preferably 0 to 20% relative to the total amount of these four components.

The epoxy resin composition of the present invention is useful as an interlayer insulating material for electronic parts, a light guide connecting between optical parts, and a resist material such as a solder resist for printed circuits and cover lays, moreover can be also used as color filter, printing ink, sealant, coating composition, coating agent and adhesives.

The photosensitive resin composition of the present invention can be cured by irradiating energy radiation such as ultraviolet rays and by heating procedure. Curing by the energy radiation such as ultraviolet rays can be carried out by a common method. For example, when ultraviolet rays are irradiated, a UV generating apparatus such as low pressure mercury lamp, high pressure mercury lamp, ultra-high pressure mercury lamp, xenon lamp, UV emission laser (excimer laser, etc.), and the like may be used. Thereafter, ultraviolet rays may be further irradiated if necessary, then heating treatment may be applied generally at 100 to 20°C, preferably at 140 to 180°C to obtain the cured product of the present invention.

The cured product of the epoxy resin composition of the present invention is utilized for electric, electronic and optical substrates such as printed circuit, optical electronic substrates and optical substrates, as a resist film, an interlayer insulation material for build up construction method and an optical guide. As products comprising these substrates, for example, computers, home electric appliances, portable equipment, and the like are included.

Specifically, for example, when a printed circuit board is made using the photo- / heat-curable photosensitive resin composition, firstly the photosensitive resin composition of the present invention is coated on a substrate for printed circuit in a film thickness of 0.5 to 160 µm by means of a method such as screen printing method, spray method, roll coating method, electrostatic coating method and curtain coating method, then dried generally at 50 to 110°C, preferably 60 to 100°C to form a coated film. After that, the coated film is exposed directly or indirectly to high-energy radiation such as ultraviolet rays through a photo-mask bearing an image pattern such as a negative film in an intensity of generally around 10 to 2,000 mJ/cm², and then unexposed area is developed with a developing liquid described later by means of spraying, oscillating dipping, brushing, scrubbing, or the like. After that, ultraviolet rays are further irradiated, then heat treatment is applied at a temperature of generally 100 to 200°C, preferably 140 to 180°C, to obtain a printed circuit board having a permanent protection film having superior gold plating property, and satisfiable various characteristics such as heat resistance, solvent resistance, acid resistance, adhesiveness and flexibility.

As the above alkaline aqueous solution to be used for developing, an inorganic alkaline aqueous solution such as potassium hydroxide, sodium hydroxide, sodium carbonate, potassium carbonate, sodium hydrogen carbonate, potassium hydrogen carbonate, sodium phosphate and potassium phosphate; and an organic alkaline aqueous solution such as tetramethylammonium hydroxide, tetraethylammonium hydroxide, tetrabutylammonium hydroxide, mono-ethanolamine, di-ethanolamine and tri-ethanolamine can be used.

Next, the present invention will be specifically explained by referring to Examples. In the following description, "parts" means "parts by weight" and "%" means "% by weight", unless otherwise noted. In this connection, softening point and epoxy equivalent were measured in accordance with the following conditions.
· Softening point
   Measurement was carried out according to the method described in JIS K-7234.
· Epoxy equivalent
   Measurement was carried out according to the method described in JIS K-7236, and results were presented in a unit of g/eq.
· Melting point: DSC method (a melting point is determined by extrapolation)
   Instrument: EXSTAR 6000, produced by Seiko Instruments Inc.
   Measurement sample: 2 to 5 mg
   Temperature rising speed: 10°C / min.

### Example 1

Into a flask equipped with a thermometer, a condenser and a stirrer, 90 parts of a condensate of glyoxal and phenol (TEP-DF; produced by Asahi Organic Chemicals Industry Co., Ltd., concentration of the compound of the formula (1) : not less than 98% by a high performance liquid chromatography detected at 274 nm, not less than 99% by a gel permeation chromatography; hereinafter the same), 10 parts of biphenyl type phenol-aralkyl resin (Ar in the formula (2) was a biphenyl group (main component was a 4,4'-derivative), all of R were hydrogen atoms, n = 1 . 41, hydroxyl group equivalent: 204 g/eq.) (KAYAHARD (TM) GPH65, produced by Nippon Kayaku Co., Ltd.), 429 parts of epichlorohydrin and 80 parts of methanol were charged and dissolved while nitrogen gas purge was carried out. The solution was heated to 70°C, and further 38 parts of flaky sodium hydroxide were added thereto in portions over 90 min. , thereafter the solution was reacted at 70°C for further 60 min. After completion of the reaction, the solution was washed with 135 parts of water twice, then from the resultant organic layer excess epichlorohydrin and the like were distilled off under heating and reduced pressure, to obtain 145 parts of an epoxy resin of the present invention (EP1) (epoxy equivalent: 179 g/eq., softening point: 181°C) as a nearly colorless resinous solid.

### Example 2

Into a flask equipped with a thermometer, a condenser and a stirrer, 90 parts of a condensate of glyoxal and phenol (TEP-DF; produced by Asahi Organic Chemicals Industry Co., Ltd.), 10 parts of biphenyl type phenol-aralkyl resin (Ar in the formula (2) was a biphenyl group (main component was a 4,4'-derivative), all of R were hydrogen atoms, n = 1. 41, hydroxyl group equivalent: 204 g/eq.), 429 parts of epichlorohydrin and 80 parts of methanol were charged and dissolved while nitrogen gas purge was carried out. The solution was heated to 70°C, and further 38 parts of flaky sodium hydroxide were added thereto in portions over 90 min., thereafter the solution was reacted at 70°C for further 60 min. After completion of the reaction, the solution was washed with 135 parts of water twice to remove salts and the like formed. After the solution was added with 270 parts of dimethylsulfoxide, the excess epichlorohydrin and the like were distilled off under heating and reduced pressure (at about 70°C, and -0.08 to -0.09 MPa) with stirring over 3 hours. Thereafter, the solution was gradually added with 150 parts of methanol while allowed to cool down, and stirred for 15 min., then 300 parts of water was gradually added. This solution was filtered under reduced pressure to obtain the desired crystalline epoxy resin. This crystal was sufficiently washed with 200 parts of methanol and further 200 parts of water, followed by drying, to obtain 140 parts of an epoxy resin of the present invention (EP2) (epoxy equivalent: 179 g/eq., melting point: 161°C) as a white to pale yellow powdery crystal.

### Example 3

The same procedures were repeated as in Example 2 except that 80 parts of a condensate of glyoxal and phenol (TEP-DF; produced by Asahi Organic Chemicals Industry Co., Ltd.), 20 parts of biphenyl type phenol-aralkyl resin, 425 parts of epichlorohydrin and 35 parts of flaky sodium hydroxide were used, to obtain 134 parts of an epoxy resin of the present invention (EP3) (epoxy equivalent: 182 g/eq., melting point: 149°C) as a white to pale yellow powdery crystal.

### Example 4

The same procedures were repeated as in Example 2 except that 90 parts of a condensate of glyoxal and phenol (TEP-DF; produced by Asahi Organic Chemicals Industry Co., Ltd.), phenyl type phenol-aralkyl resin which was a condensate of phenol and p-xylenol (Ar in the formula (2) was phenyl group, all of R were hydrogen atoms, n = 1.37, hydroxyl group equivalent: 146 g/eq.) (synthesized according to the method described in JP-A-63-238129) instead of the biphenyl type phenol-aralkyl resin, 436 parts of epichlorohydrin and 39 parts of flaky sodium hydroxide were used, to obtain 142 parts of an epoxy resin of the present invention (EP4)(epoxy equivalent: 173 g/eq., melting point: 153°C) as a white powdery crystal.

### Example 5

The same procedures were repeated as in Example 2 except that 90 parts of a condensate of glyoxal and phenol (TEP-DF, produced by Asahi Organic Chemicals Industry Co., Ltd.), a phenol-novolac resin (produced by Meiwa Plastic Industries, Ltd., softening point: 83°C, hydroxyl group equivalent: 106 g/eq.) instead of a biphenyl type phenol-aralkyl resin, 455 parts of epichlorohydrin and 40 parts of flaky sodium hydroxide were used, to obtain 147 parts of an epoxy resin of the present invention (EP5) (epoxy equivalent: 172 g/eq., melting point: 159°C) as a white powdery crystal.

### Example 6

The same procedures were repeated as in Example 2 except that 90 parts of a condensate of glyoxal and phenol (TEP-DF, produced by Asahi Organic Chemicals Industry Co., Ltd.), bisphenol F instead of a biphenyl type phenol-aralkyl resin, 460 parts of epichlorohydrin and 40 parts of flaky sodium hydroxide were used, to obtain 144 parts of an epoxy resin of the present invention (EP6) (epoxy equivalent: 172 g/eq., melting point: 158°C) as a white powdery crystal.

### Example 7

The same procedures were repeated as in Example 2 except that 90 parts of a condensate of glyoxal and phenol (TEP-DF, produced by Asahi Organic Chemicals Industry Co., Ltd.), bisphenol S instead of a biphenyl type phenol-aralkyl resin, 455 parts of epichlorohydrin and 39 parts of flaky sodium hydroxide were used, to obtain 144 parts of an epoxy resin of the present invention (EP7)(epoxy equivalent: 179 g/eq., melting point: 160°C) as a white powdery crystal.

### Comparative Example 1

Into a flask equipped with a thermometer, a condenser and a stirrer, 100 parts of a condensate of glyoxal and phenol (TEP-DF; produced by Asahi Organic Chemicals Industry Co. , Ltd.), 462 parts of epichlorohydrin and 80 parts of methanol were charged and dissolved while nitrogen gas purge was carried out. The solution was heated to 70°C, and further 40 parts of flaky sodium hydroxide were added thereto in portions over 90 min., thereafter the solution was reacted at 70°C for further 60 min. After completion of the reaction, the solution was washed with 150 parts of water twice followed by distilling off of the excess epichlorohydrin and the like from the resulting organic layer under heating and reduced pressure at 200°C, to obtain 149 parts of an epoxy resin (EP8) (epoxy equivalent: 168 g/eq., softening point: 84°C) as a colorless resin.

### Comparative Example 2

Into a flask equipped with a thermometer, a dropping funnel, a condenser and a stirrer, 99.5 parts of a condensate of glyoxal and phenol, 460 parts of epichlorohydrin and 100 parts of methanol were charged while nitrogen gas purge was carried out. The solution was heated to 70°C with stirring to dissolve, and then 40 parts of flaky sodium hydroxide were added thereto in portions over 90 min., thereafter the solution was reacted at the refluxing temperature for further 1 hour. After completion of the reaction, 250 parts of water were added to the reaction solution to wash with water and salt and the like formed were removed thereby. Then 250 parts of dimethylsulfoxide were added thereto, the excess epichlorohydrin and the like were distilled off under heating and reduced pressure (at about 70°C, and -0.08 to -0.09 MPa) with stirring over 3 hours. To the remaining solution were added 100 parts of methanol while maintaining at 50°C, and the solution was stirred for 15 min., then heated to 70°C and 500 parts of water were gradually added thereto. After cooled down to room temperature, the solution was filtered under reduced pressure to obtain a comparative epoxy resin. Further, this crystal was sufficiently washed with a mixed solution of 100 parts of methanol and 300 parts of water, and dried, to obtain 142 parts of an epoxy resin (EP9) (epoxy equivalent: 166 g/eq., melting point: 174°C) as a powdery crystal.

### Example 8 (including Comparative Example 3)

Compositions were compounded using the epoxy resin (EP1) obtained in Example 1 (Example 8) or the epoxy resin (EP8) obtained in Comparative Example 1 (Comparative Example 3) for an epoxy resin, phenol-novolac resin (softening point: 83°C, hydroxyl group equivalent: 106 g/eq.) for a curing agent, and triphenylphosphin (TPP) for a curing accelerator, in mass ratios shown in "Composition of the Compound" in Table 1. Molded resin products were prepared from these compositions by transfer molding, and cured at 160°C for 2 hours, then further at 180°C for 8 hours.

Physical properties of the resulting cured products were measured, and the results are shown in Table 1. In this connection, Measurements of physical properties were carried out according to the following methods.
· Glass transition temperature (TMA):
   TM-7000, produced by ULVAC Inc.
   Temperature rising speed: 2°C / min.
· Water absorption rate: a mass increase percent (%) of a disc-like test piece of 5 cm in diameter x 4 mm in thickness after boiling in water for 72 hours.
· IZOD impact test: the method according to JIS K-6911.
· K1C: the method according to JIS K-6911.

[Table 1]

**Table 1**

| | Composition of compound | |
|---|---|---|
| | Example 8 | Comparative Example 3 |
| Epoxy resin (EP1) | 100 | |
| Epoxy resin (EP8) | | 100 |
| Phenol-Novolac | 59 | 63 |
| TPP | 1.0 | 1.0 |

| | Property of cured product | |
|---|---|---|
| | Example 8 | Comparative Example 3 |
| Glass transition point (°C) | 190 | 198 |
| Water absorption rate (%) | 1.2 | 1.9 |
| IZOD impact test (KJ/m) | 14 | 10 |
| K1C (Nmm^{-1.5}) | 22 | 17 |

### Example 9 (including Comparative Example 4)

Varnishes were prepared by dispersing or dissolving the epoxy resin (EP2) obtained in Example 2 (Example 9) or a mixture in mass ratio 9/1 of Epicoat (trade mark) 1031S (produced by Japan Epoxy Resins Co., Ltd., tetrakisphenolethane type epoxy resin, epoxy equivalent: 195 g/eq. , softening point: 92 °C) and NC-3000 (produced by Nippon Kayaku Co., Ltd., biphenyl type phenol-aralkyl type epoxy resin, in the general formula (2), R = H, Ar = biphenyl, n = 1.75, epoxy equivalent: 271 g/eq., softening point: 53°C) (EP10) (Comparative Example 4) for an epoxy resin, a phenol-novolac resin (softening point: 83°C, hydroxyl group equivalent: 106 g/eq., PN in Table 1) for a curing agent, triphenylphosphin (TPP) for a curing accelerator, in carbitol acetate (CA in Table 2) uniformly. In this connection, compositions of these varnishes are shown in the column of "Composition of Varnish" in Table 2 in the unit of parts. Viscosities at 25°C of these varnishes were measured after 1 hour from the mixing and after standing at 70°C for 10 hours. The results are shown in the column of "Property of Varnish" in Table 2.

[Table 2]

**Table 2**

| | Composition of varnish | |
|---|---|---|
| | Example 9 | Comparative Example 4 |
| EP 2 | 20 | |
| EP 10 | | 20 |
| PN | 10 | 10 |
| TPP | 0.2 | 0.2 |
| CA | 30 | 30 |

| | Property of varnish | |
|---|---|---|
| | Example 9 | Comparative Example 4 |
| Viscosity (at 25°C, mPa·s) | | |
| After 1 hour | 141 | 546 |
| After 10 hours | 170 | 1,137 |
| After 24 hours | 342 | Not measurable |

### Example 10 (including Comparative Example 5)

Compositions were compounded using the epoxy resin (EP2) obtained in Example 2 (Example 10) or the epoxy resin (EP8) obtained in Comparative Example 1 (Comparative Example 5) for an epoxy resin, phenol-novolac resin (softening point: 83°C, hydroxyl group equivalent: 106 g/eq.) for a curing agent, and triphenylphosphin (TPP) for a curing accelerator, in the compositions shown in the column of "Composition of Compound" in the following Table 3. Molded resin products were prepared from these compositions by transfer molding, and cured at 160°C for 2 hours, then at 180°C for 4 hours and further at 200°C for 1 hour. The results of measurements on glass transition point and impact resistance for these test pieces are shown in the column of "Property of cured product" in Table 3.

In this connection, measurements of the physical properties were carried out as described above, and peel strength was measured according to the following method.
- Peel strength: The method according to JIS K-6911

[Table 3]

**Table 3**

| | Composition of compound | |
|---|---|---|
| | Example 10 | Comparative Example 5 |
| Epoxy resin (EP1) | 100 | |
| Epoxy resin (EP8) | | 100 |
| Phenol-Novolac | 59 | 63 |
| TPP | 1.0 | 1.0 |

| | Property of cured product | |
|---|---|---|
| | Example 10 | Comparative Example 5 |
| Glass transition point (°C) | 199 | 205 |
| IZOD impact test (KJ/m) | 16 | 11 |
| Peel strength (Cu, kN/m) | 2.3 | 1.9 |

From the above results, it was proven that an epoxy resin composition comprising the crystalline epoxy resin of the present invention has high storage stability. Also, the resultant cured product of the epoxy resin has been greatly improved in toughness and adhesiveness thereof in comparison with the conventional tetra-functional epoxy resin. Accordingly, the cured product of the epoxy resin composition comprising the crystalline epoxy resin of the present invention is extremely useful in using for insulating materials and laminated sheets (printed circuit board and the like) for electric and electronic parts, various composite materials including CFRP, adhesives, coating compositions, resist materials, and the like. Example 11 (including Comparative Example 6)

An epoxy resin composition of the present invention and a comparative epoxy resin composition were obtained by mixing the epoxy resin (EP2) obtained in the above Example 2 (Example 11) or the epoxy resin (EP9) obtained in Comparative Example 2 (Comparative Example 6) in the compounding ratios shown in Table 4, and kneading with a three roll mill. These compositions were coated on a substrate for a printed circuit board of about 10 cm square by means of a screen printing method to obtain a dry film thickness of 15 to 25 µm, and the coated films were dried in a hot air dryer at 80°C for 30 minutes. The coated substrates were then exposed to ultraviolet rays using a UV exposure machine (Model HMW-680GW, produced by ORC Manufacturing Co., Ltd.) through a mask bearing an image of circuit pattern. After that, the substrates were subjected to spray development with a 1% sodium carbonate aqueous solution to remove the resin in unexposed areas. After rinsing with water and drying, the printed substrates were subjected to a heat curing reaction in a hot air dryer at 150°C for 60 minutes to obtain cured films. The test results of these cured films are shown in Table 5. In this connection, test methods and criteria for evaluations were as described below.

### Tackiness:

A coated film on a substrate after drying was rubbed with absorbent cotton to evaluate tackiness of the film.
o: Absorbent cotton does not stick to the film.
x: Lint of absorbent cotton sticks to the film.

### Heat stability:

After drying a resin composition at 80°C for 30, 40, and 50 minutes, easiness to be developed was evaluated based on a developing time required for perfect removal of the resin composition in development, according to the following criterion.
- o:: Less than 60 seconds.
- x:: Not less than 60 seconds.

### Resolution:

A coated film after drying was in tight contact with a 50 µm negative pattern, and irradiated with UV rays in an integrated amount of 300 mJ/cm ² The coated film was then developed with a 1% sodium carbonate aqueous solution under a spray pressure of 2.0 kg/cm² for 60 seconds, and the transferred image pattern was examined under a microscope. Evaluation was made using the following criterion.
- o:: Edge of image is linear and resolved.
- x:: Image is peeled off or edge of image is irregular.

### Photosensitivity:

A coated film after drying was in tight contact with a step tablet with 21 steps (produced by Eastman Kodak Co.), and irradiated with UV rays in an integrated amount of 500 mJ/cm². The coated film was then developed with a 1% sodium carbonate aqueous solution under a spray pressure of 2.0 kg/cm² for 60 seconds, and a step number of the coated film remained without development was confirmed.

### Adhesiveness:

On a test piece, 100 grids of 1 mm square each were prepared. A peeling test (JIS K-5600-5-6) was carried out using a cellophane tape on the test piece, and adhesiveness was evaluated by a number of lattice adhered to the test piece. The results were recorded according to the following criterion.
- o:: 100/100, no abnormality is found.
- Δ:: 100/100, peeling off is observed in corner or edge.
- x:: ≤99/100.

### Heat resistance:

A test piece was coated with a rosin type flux and then immersed in a solder bath at 260°C for 5 seconds. This procedure was repeated 3 cycles. After the test piece was allowed to cool down to room temperature, a peeling test with a cellophane tape was carried out, and the results were recorded according to the following criterion.
- o:: No abnormality on coated film, no blister and peeling off is observed.
- Δ:: Blister or peeling off is observed a little.
- x:: Blister or peeling off is observed on the coated film.

[Table 4]

**Table 4**

| | | Example 11 | Comparative Example 6 |
|---|---|---|---|
| Epoxy resin EP 2 Epoxy resin EP 9 | | 11.8 | |
| | | | 11.0 |
| Resin soluble to alkaline aqueous solution | | | |
| CCR-1159H | *1 | 46.5 | 46.5 |

| Cross-linking agent | | | |
|---|---|---|---|
| DHPA | *2 | 6.1 | 6.1 |

| Photo-polymerization initiator | | | |
|---|---|---|---|
| Irgacure 907 | *3 | 4.5 | 4.5 |
| DETX-S | *4 | 0.9 | 0.9 |

| Heat curing agent | | | |
|---|---|---|---|
| Melamine | | 0.8 | 0.8 |

| Filler | | | |
|---|---|---|---|
| Barium sulfate | | 24.2 | 24.2 |
| Phthalocyanine blue | | 0.45 | 0.45 |

| Additives | | | |
|---|---|---|---|
| BYK-354 | *5 | 0.61 | 0.39 |
| KS-66 | *6 | 1.21 | 1.21 |

| Solvent | | | |
|---|---|---|---|
| CA | | 4.54 | 4.54 |

Note:
* 1: Produced by Nippon Kayaku Co., Ltd., cresol-novolac type resin soluble to an alkaline aqueous solution.
* 2: Produced by Nippon Kayaku Co., Ltd., dipentaerythritol polyacrylate.
* 3: Produced by Vantico AG., 2-methyl-(4-(methylthio)phenyl) -2-morpholino-1-propane.
* 4: Produced by Nippon Kayaku Co., Ltd., 2,4-diethylthioxanthone.
* 5: Produced by BYK Chemie, a leveling agent.
* 6: Produced by Shin-Etsu Chemical Co., Ltd., antifoaming agent.

[Table 5]

**Table 5**

| | Example 11 | | | Comparative Example 7 | | |
|---|---|---|---|---|---|---|
| Prebake | 30 min. | 40 min. | 50 min. | 30 min. | 40 min. | 50 min. |
| Tackiness | o | o | o | o | o | o |
| Easiness in development | o | o | o | o | o | o |
| Photosensitivity | 7 | 7.3 | 7.3 | 7 | 7 | 7 |
| Resolution | o | o | o | o | o | o |
| Adhesiveness | o | o | o | Δ | Δ | Δ |
| Heat resistance | o | o | o | o | o | o |

### Example 12

The same procedures were repeated as in Example 2 except that 80 parts of a condensate of glyoxal and phenol (TEP-DF, produced by Asahi Organic Chemicals Industry Co. , Ltd. ) , 20 parts of ortho-cresol-novolac resin (softening point: 81°C) instead of a biphenyl type phenol-aralkyl resin, 455 parts of epichlorohydrin and 38 parts of flaky sodium hydroxide were used, to obtain 137 parts of an epoxy resin of the present invention (epoxy equivalent: 180 g/eq. , melting point: 145°C) as a white powdery crystal.

### Example 13

The same procedures were repeated as in Example 2 except that 70 parts of a condensate of glyoxal and phenol (TEP-DF, produced by Asahi Organic Chemicals Industry Co. , Ltd.), 30 parts of meta- and para-cresol-mixture-novolac resin (EP 5000, produced by Asahi Organic Chemicals Industry Co., Ltd.) instead of a biphenyl type phenol-aralkyl resin, 455 parts of epichlorohydrin and 35 parts of flaky sodium hydroxide were used, to obtain 137 parts of an epoxy resin of the present invention (epoxy equivalent: 189 g/eq. , melting point: 162°C) as a white powdery crystal.

### Example 14

Into a flask equipped with a thermometer, a condenser and a stirrer, 20 parts of a condensate of glyoxal and phenol (TEP-DF; produced by Asahi Organic Chemicals Industry Co., Ltd.), 80 parts of bisphenol F, 429 parts of epichlorohydrin and 40 parts of methanol were charged and dissolved while nitrogen gas purge was carried out. The solution was heated to 70°C, and further 40 parts of flaky sodium hydroxide were added thereto in portions over 90 min., thereafter the solution was reacted at 70°C for further 60 min. After completion of the reaction, the solution was washed with 150 parts of water once to remove salt and the like formed, then from the resultant organic layer excess epichlorohydrin and the like were distilled off under heating and reduced pressure, and the residue was dissolved in 450 parts of methyl isobutyl ketone. The solution was heated to 70°C, and 7 parts of a 30% sodium hydroxide aqueous solution were added thereto, then reacted for 1 hour. Subsequently, the solution was washed with water until washing fluid became neutral, then from the organic layer methyl isobutyl ketone and the like were distilled off, to obtain 145 parts of an epoxy resin, which was a liquid epoxy resin having an epoxy equivalent of 163 g/eq. and viscosity at 25°C of 129 Pa·s (E type viscometer).

### Comparative Example 7

A bisphenol F type epoxy resin (epoxy equivalent: 164 g/eq. , viscosity at 25°C: 3,590 mPa·s, product name: RE-404S, produced by Nippon Kayaku Co. , Ltd. ) and a tetrakisphenolethane type epoxy resin (epoxy equivalent: 167 g/eq., melting point: 173°C, GTR-1800, produced by Nippon Kayaku Co., Ltd.) were mixed in a ratio of 8:2 and melted, to obtain a liquid epoxy resin. Viscosity at 25°C was 198 Pa·s (E type viscometer).

In comparison of the epoxy resins obtained in Example 14 and Comparative Example 7, although a ratio of the tetrakisphenolethane type epoxy resin and the bisphenol F type epoxy resin was 2:8 in any case, it can be found that the epoxy resin of the present invention has very lower viscosity in comparison with that of the epoxy resin obtained by simply mixing (in spite of that the bisphenol F type epoxy resin used in the Comparative Example was, among others, a liquid epoxy resin having lower viscosity). Example 15 (including Comparative Example 8)

An epoxy resin composition of the present invention was obtained by uniformly mixing 82 parts of the liquid epoxy resin obtained in Example 14 and 32 parts of KAYAHARD A-A (bis(3-ethyl-4-aminophenyl)methane, produced by Nippon Kayaku Co., Ltd., amine type curing agent). The resulting composition was poured into a metal mold and cured at 120°C for 2 hours, at 150°C for 3 hours, and at 180°C for 2 hours, to obtain a test piece of cured product. Similarly, a composition was obtained by using 86 parts of a bisphenol F type epoxy resin (RE-304S, produced by Nippon Kayaku Co., Ltd. , epoxy equivalent: 172 g/eq.) and 32 parts of KAYAHARD A-A, and similarly cured. Glass transition temperature of a test piece of the resulting cured product by using DMA (dynamic viscoelasticity measuring apparatus), and its glass transition temperature and linear expansion coefficient using by TMA (thermal and mechanical properties measuring apparatus, produced by ULVAC Inc., model TM-7000) were measured, and flexural strength was measured according to JIS K-6911. The results are shown in the following Table C.

[Table 6]

**Table 6**

| | Example 15 | Comparative Example 8 |
|---|---|---|
| Glass transition point (°C) | | |
| DMA | 165 | 141 |
| TMA | 130 | 119 |

| Linear expansion coefficient | | |
|---|---|---|
| α1 (ppm) | 68 | 75 |
| α2 (ppm) | 169 | 185 |

| Flexural strength | | |
|---|---|---|
| at 30°C (MPa) | 135 | 122 |
| at 120°C (MPa) | 56 | 2 |

In comparison with conventional epoxy resin, since the cured product of epoxy resin composition of the present invention has improved glass transition point and drastically lowered linear expansion coefficient, it can be said that the epoxy resin of the present invention is superior in heat resistance.

### Example 16

Into a flask equipped with a thermometer, a dropping funnel, a condenser and a stirrer, 95 parts of a condensate of glyoxal and phenol { TEP-DF; produced by Asahi Organic Chemicals Industry Co., Ltd., content of 1,1,2,2-tetrakis(4-hydroxyphenyl)ethane: 98 area% (HPLC, detected by UV 274 nm)}, 5 parts of biphenyl type phenol-aralkyl resin {Ar in the formula (2) was a biphenyl group (main component was a 4,4'-derivative), all of R were hydrogen atoms, n = 1.39, hydroxyl group equivalent: 202 g/eq., KAYAHARD(TM) GPH65, produced by Nippon Kayaku Co., Ltd.}, 555 parts of epichlorohydrin and 110 parts of methanol were charged, and the mixture was heated to the refluxing temperature to be dissolved while nitrogen gas purge was carried out. Subsequently, 40 parts of flaky sodium hydroxide were added thereto in portions over 100 min., thereafter reacted at the refluxing temperature for further 1 hour. After completion of the reaction, salt and the like formed was removed by washing with 150 parts of water twice, to obtain an epoxy resin reaction liquid. Gradually, temperature was raised to finally about 70°C and pressure was reduced to finally about -0.08 MPa, and excess epichlorohydrin and the like were distilled off until the resin concentration became about 80% by weight. To the resulting solution were added 200 parts of acetone and further 170 parts of ion exchanged water at 25°C were added thereto, to obtain a crystal dispersing solution. Further, gradually, temperature was raised up to finally about 80°C and pressure was reduced down to finally about -0.09 MPa, and solvent was distilled off until no solvent to be distilled out. Temperature and pressure conditions were further tightened up to about 120°C and about -0.095 MPa, and drying procedure was carried out for 12 hours. Thus, 149 parts of a desired crystalline epoxy resin was obtained. The resultant epoxy resin showed epoxy equivalent of 169 g/eq. and melting point of 165°C.

### Industrial Applicability

A cured product of the epoxy resin of the present invention exhibits the same level of heat resistance, and also improved properties in brittleness, water resistance, and the like, in comparison with a cured product of the conventional epoxy resin to be obtained by glycidylation of tetrakisphenolethane. Further, a cured film to be formed with a thermo-setting resin composition or a photo- and thermo-curable resin composition comprising the crystalline epoxy resin of the present invention is superior in adhesiveness in comparison with the conventional one, and extremely useful for a wide range of application fields such as electric and electronic materials including a sealant, molding materials, casting molding materials, laminated materials, coating compositions, adhesives, resists and optical materials.

## Claims

1. An epoxy resin obtained by glycidylation of a mixture of:
(a) a phenol compound condensate which is a condensate of phenols and glyoxal and contains not less than 80% (area % by a gel permeation chromatography) of a compound represented by the formula (1): 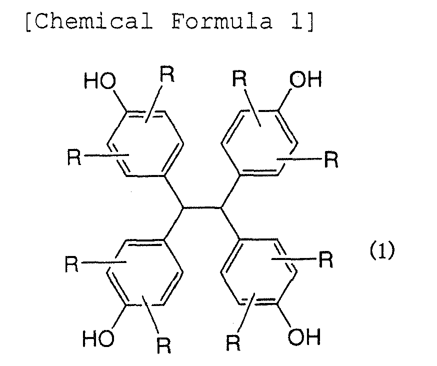 (wherein R represents each independently hydrogen atom, (C₁-C₁₅) hydrocarbon group or trifluoromethyl group); and
(b) a phenol compound other than (a) or a phenol resin.

2. The epoxy resin according to claim 1, wherein the component (b) is a phenol-aralkyl resin.

3. The epoxy resin according to claim 1 or 2, **characterized by** that a form thereof is crystalline powder.

4. The epoxy resin according to claim 3, wherein melting point thereof is 80 to 170°C.

5. The epoxy resin according to any one of claims 1 to 4, wherein a ratio of the component (b) is not more than 25% by weight relative to the total amount of a mixture of the component (a) and the component (b).

6. The epoxy resin according to any one of claims 1 to 5, wherein the component (b) is a biphenyl type phenol-aralkyl resin.

7. A process for producing an epoxy resin, **characterized by** that a mixture of the component (a) and the component (b) described in claim 1 is glycidylated with an epihalohydrin.

8. The process for producing an epoxy resin according to claim 7, **characterized by** that a mixture composed of 65 to 95% by weight of the component (a) and 35 to 5% by weight of the component (b) relative to the total amount of the component (a) and the component (b) is glycidylated with an epihalohydrin, then an epoxy resin crystal is separated out from the resultant reaction liquid.

9. The process for producing an epoxy resin according to claim 8, **characterized by** that water is added in order to separate out an epoxy resin crystal.

10. The process for producing an epoxy resin according to any one of claims 7 to 9, **characterized by** that an epoxy resin crystal is obtained by distilling off solvents contained in an epoxy resin crystal dispersion obtained by separating out an epoxy resin crystal.

11. An epoxy resin composition **characterized by** comprising the epoxy resin according to any one of claims 1 to 6 and a curing agent.

12. A cured product obtained by curing the epoxy resin composition according to claim 11.

13. An epoxy resin composition, **characterized by** comprising the epoxy resin according to any one of claims 1 to 6 and a compound having an ethylenically unsaturated group.

14. The epoxy resin according to any one of claims 1 to 4, wherein a ratio of the component (b) is not more than 35% by weight relative to the total amount of a mixture of the component (a) and the component (b).
